Europäisches Patentamt

European Patent Office

Office européen des brevets

(11) Numéro de publication: **0 223 963**
**B1**

(12) # FASCICULE DE BREVET EUROPEEN

(45) Date de publication du fascicule du brevet:
20.06.90

(21) Numéro de dépôt: 86113181.1

(22) Date de dépôt: 25.09.86

(51) Int. Cl.⁵: **A23P 1/02**, B01J 2/12,
A23L 1/164

(54) Agglomération de produits alimentaires.

(30) Priorité: 30.10.85 CH 4673/85

(43) Date de publication de la demande:
03.06.87 Bulletin 87/23

(45) Mention de la délivrance du brevet:
20.06.90 Bulletin 90/25

(84) Etats contractants désignés:
AT BE DE FR IT LU NL SE

(56) Documents cités:
CH-A- 305 692
GB-A- 1 318 740
US-A- 3 101 040
US-A- 3 557 718
US-A- 3 580 545
US-A- 3 615 676
US-A- 3 830 943

(73) Titulaire: SOCIETE DES PRODUITS NESTLE S.A., Case
postale 353, CH-1800 Vevey(CH)

(72) Inventeur: Buhler, Marcel, La Musardière,
CH-1111 Tolochenaz(CH)
Inventeur: Darbyshire, John, Entremonts 26,
CH-1400 Yverdon(CH)
Inventeur: Jaccard, Michel, Penchèvre 13,
ch-1350 Orbe(CH)

ACTORUM AG

**Description**

La présente invention a pour objet un procédé d'agglomération d'au moins deux produits alimentaires particulaires, dans lequel on fait adhérer les particules d'au moins un produit secondaire sur les particules d'un produit principal à l'aide d'un agent agglomérant liquide.

La présente invention a également pour objet un appareil pour la mise en oeuvre en continu du procédé, comprenant un tambour rotatif incliné, un châssis support du tambour, des moyens d'entraînement pour faire tourner le tambour autour de son axe, un dispositif d'introduction du produit principal à l'extrémité supérieure du tambour et un dispositif d'évacuation du produit aggloméré à l'extrémité inférieure du tambour.

Le problème de l'incorporation de composants sensibles à la chaleur, tels que certaines protéines ou certains acides aminés, des arômes ou des vitamines dans des flocons de céréales obtenus par exemple par séchage sur rouleau ou extrusion d'une bouillie à base de céréales a trouvé diverses solutions telles que le mélange à sec ou l'agglomération des particules des composants sensibles à la chaleur avec les flocons de céréales après le séchage des flocons.

Or, le mélange à sec de produits particulaires qui ont des granulométries et des densités apparentes souvent très différentes est malaisé et présente le risque d'un démélange trop rapide. Ce risque est particulièrement grand lorsqu'un produit à relativement faible densité apparente est mélangé à sec avec un produit à relativement forte densité apparente.

Mais les procédés d'agglomération connus destinés à pallier ce défaut du mélange à sec peuvent également présenter certains inconvénients, notamment lorsque les produits particulaires ont des hygroscopicités différentes.

C'est ainsi qu'un procédé connu consiste à humidifier avec de l'eau, dans un lit fluidisé ou une goulotte d'agglomération, un mélange intime de flocons à base d'amidon sortant d'un sécheur à rouleau et de produits alimentaires ou aromatiques en poudre, de manière à faire adhérer la poudre sur les flocons. Ce procédé présente le risque d'agglomérer les particules de la poudre entre elles lorsqu'elles sont plus hygroscopiques que les flocons.

De même, un autre procédé connu consiste à introduire des flocons de céréales et un sirop de sucre dans un tambour rotatif, à laisser se mélanger les flocons et le sirop le long des deux premiers tiers de leur parcours dans le tambour et à introduire ensuite une poudre aromatique du type crème glacée lyophilisée dans le dernier tiers du tambour pour qu'elle adhère aux flocons encore collants. Ce procédé présente le risque d'agglomérer les flocons entre eux et d'obtenir une distribution irrégulière de la poudre autour des flocons.

La présente invention a pour but de proposer un procédé et un appareil qui permettent l'agglomération de produits alimentaires particulaires dont les granulométries, les densités apparentes et les hygroscopicités respectives sont différentes, et qui permettent en particulier de faire adhérer de manière régulière les particules d'une poudre à densité apparente et hygroscopicité comparativement plus grandes sur des flocons à densité apparente et hygroscopicité comparativement plus faibles, tout en assurant une très bonne homogénéité du mélange desdits produits particulaires.

A cet effet, le procédé selon la présente invention est caractérisé par le fait que l'on forme un tourbillon des particules dudit produit principal autour d'un axe horizontal ou incliné, on pulvérise ledit agent agglomérant de l'extérieur sur le tourbillon et l'on distribue les particules dudit produit secondaire de l'intérieur dans le tourbillon.

De même, l'appareil selon la présente invention est caractérisé par le fait qu'il comprend un dispositif de mise en rotation des particules du produit principal autour d'un axe incliné dans une première partie dudit tambour, au moins un dispositif de distribution de produit secondaire dans une moitié ascendante d'une seconde partie du tambour, et un dispositif de pulvérisation de l'agent agglomérant dans ladite moitié descendante de ladite seconde partie du tambour.

On a constaté en effet que ce procédé et notamment cet appareil se prêtent mieux que les procédés et appareils connus à l'agglomération de produits alimentaires particulaires présentant des caractéristiques physiques différentes quant à leur granulométrie, leur hygroscopicité et leur densité apparente. On a constaté en particulier avec surprise que l'on peut faire adhérer ainsi de manière très régulière les particules d'un produit secondaire comparativement plus hygroscopique tel qu'une poudre de lait écrémé p. ex. sur des particules d'un produit principal comparativement moins hygroscopique tel que des flocons de céréales p. ex. tout en utilisant une quantité relativement petite d'agent agglomérant et en garantissant également une très bonne homogénéité du mélange des différentes particules. On suppose que l'on doit ce résultat surprenant au fait que l'enrobage des particules du produit principal avec les gouttelettes de l'agent agglomérant et la mise en contact des particules du produit secondaire avec les particules du produit principal enrobé se font ainsi de manière spatialement distincte mais temporellement quasi simultanée. Ceci permet notamment de pulvériser des gouttelettes très fines d'agent agglomérant qui enrobent ou couvrent les particules du produit principal de manière très homogène mais n'entrent en contact avec elles qu'une fraction de seconde avant les particules du produit secondaire. Ainsi, si l'on pulvérise p. ex. un sirop de sucre sous forme de gouttelettes très fines, la faible quantité d'eau qu'elles contiennent n'a pas le temps de s'évaporer ni de pénétrer suffisamment dans les particules du produit principal pour que l'effet agglomérant ou collant soit perdu.

Dans le présent procédé, les expressions "une première partie et une deuxième partie, voire une troisième partie du tambour" désignent des tranches d'espace cylindrique découpées par des plans perpendiculaires à l'axe du tambour dans l'espace cylindrique délimité par la paroi du tambour. Les parties se suivent de l'extrémité supérieure à l'extrémité inférieure du tambour.

De même, les expressions "une moitié ascendante et une moitié descendante du tambour" désignent les espaces semi-cylindriques découpés par le plan vertical passant par l'axe du tambour dans l'espace cylindrique délimité par la paroi du tambour. Les termes "ascendante" ou "descendante" utilisés dans ces expressions situent les deux "moitiés" par rapport à l'axe du tambour en désignant le côté où la paroi du tambour est animée d'un mouvement ascendant ou descendant à hauteur d'axe.

Pour mettre en oeuvre le présent procédé, on forme de préférence ledit tourbillon de particules dans un tambour rotatif, la rotation du tourbillon étant entretenue par la gravitation et le frottement contre la paroi du tambour.

Il est en effet possible de former un tourbillon de particules qui tournent autour d'un axe dans un tambour rotatif, le frottement contre la paroi du tambour donnant une impulsion vers le haut du côté ascendant du tourbillon et la gravitation assurant le mouvement de chute vers le bas du côté descendant du tourbillon. Un tel tourbillon est adjacent à la paroi du tambour dans la moitié ascendante du tambour et laisse un espace libre dans la moitié descendante du tambour. C'est ainsi que l'on peut pulvériser ledit agent agglomérant sur le côté descendant du tourbillon à partir de l'espace laissé libre entre le tourbillon et la paroi du tambour dans la moitié descendante du tambour.

L'axe de rotation d'un tel tourbillon est pratiquement parallèle à l'axe du tambour et se situe pratiquement à la même hauteur dans la moitié ascendante du tambour. On peut distribuer les particules dudit produit secondaire dans le tourbillon à partir d'une zone intérieure du tourbillon coïncidant avec ou proche de son axe de rotation. On peut par exemple distribuer les particules du produit secondaire sous forme d'un rideau chutant de la zone de distribution dans la partie inférieure du tourbillon.

Quoiqu'une mise en oeuvre du procédé en discontinu soit réalisable et puisse présenter certains avantages dans des cas particuliers, on préfère généralement une mise en oeuvre en continu. C'est ainsi que l'on peut former ledit tourbillon de particules dans un tambour incliné, introduire le produit principal en continu dans le tourbillon par l'extrémité supérieure du tambour et évacuer, autrement dit recueillir le produit aggloméré en continu du tourbillon par l'extrémité inférieure du tambour.

La nature des particules du produit alimentaire principal qui se prête à la mise en oeuvre du présent procédé peut être diverse. Il peut s'agir de granules d'un produit lyophilisé ou de flocons obtenus par séchage sur rouleau d'une bouillie de céréales p. ex. Il peut également s'agir de céréales expansées obtenues par cuisson-extrusion d'une farine de céréale humidifiée et présentant des formes diverses telles qu'étoiles, anneaux ou flocons de taille relativement grande par exemple.

Les produits alimentaires particulaires secondaires qui se prêtent à la mise en oeuvre du présent procédé sont de préférence sous forme d'une poudre relativement fine quoique d'autres formes de granulométrie semblables à celles du produit principal soient également possibles. On peut par exemple réaliser le présent procédé pour agglomérer au moins deux produits secondaires différents sous forme de flocons ou de granules avec un produit principal lui-même sous forme de flocons ou de granules. Cependant, le présent procédé convient particulièrement bien pour faire adhérer sur les particules dudit produit principal une poudre contenant des composants sensibles à la chaleur tels que certaines protéines ou certains acides aminés, vitamines, arômes ou pigments par exemple.

Les agents agglomérants liquides alimentaires qui conviennent pour la mise en oeuvre du présent procédé peuvent également être de natures très diverses. Il suffit qu'ils soient d'une part finement pulvérisables et d'autre part capables d'exercer un effet agglomérant ou collant entre les particules du produit principal et les particules du produit secondaire. On peut même utiliser un liquide non aqueux tel qu'une matière grasse fondue p. ex. Mais le présent procédé convient particulièrement bien pour l'agglomération à l'aide d'un sirop de sucre et/ou d'amidon, notamment un sirop à haute teneur en matière sèche.

C'est ainsi que dans une forme d'exécution particulière du présent procédé, les particules du produit principal sont des flocons de céréales obtenus par séchage sur rouleau d'une bouillie à base de céréales, le produit secondaire est un lait écrémé en poudre et l'agent agglomérant est un sirop de sucre et/ou d'amidon.

Dans une autre forme d'exécution particulière du présent procédé, les particules du produit principal sont des céréales expansées obtenues par cuisson-extrusion d'une farine de céréale humidifiée, le produit secondaire est une poudre de fruit, de cacao ou de sucre et l'agent agglomérant est un sirop de sucre et/ou d'amidon.

De préférence et de manière générale, lorsqu'on met en oeuvre le présent procédé en continu, on introduit par h dans le tourbillon 65-85 parties en poids de produit particulaire principal présentant une densité apparente de 90-200 g/l et une teneur en eau de 0,5-12% en poids, on pulvérise par h sur le tourbillon 15-30 parties en poids de sirop de sucre et/ou d'amidon présentant une teneur en eau de 15-60% en poids, on distribue par h dans le tourbillon 3-30 parties en poids de produit particulaire secondaire présentant une teneur en eau de 0-12% en poids, et l'on évacue par h du tourbillon 102-118 parties en poids de produit particulaire aggloméré présentant une densité apparente de 120-250 g/l et une teneur en eau de 2,0-15% en poids.

En effet, le présent procédé est particulièrement indiqué pour faire adhérer une quantité mineure de produit particulaire secondaire sur une quantité majeure d'un produit particulaire principal présentant une densité apparente relativement faible de manière à conserver la forme et la nature individuelle des particules du produit principal et à obtenir un produit particulaire aggloméré présentant également une densité apparente relativement faible.

Dans la forme d'exécution particulière concernant les céréales expansées, destinées en particulier à être consommées comme céréales pour petit-déjeuner, les quantités de produit particulaire secondaire utilisées sont généralement relativement modestes et le but recherché est le plus souvent une amélioration de l'aspect et des qualités organoleptiques du produit principal. Le présent procédé permet alors précisément d'obtenir une couverture particulièrement homogène de la surface de particules relativement grandes de produit principal avec des particules relativement petites de produit secondaire.

A propos de la forme d'exécution particulière concernant les flocons de céréales, destinés en particulier à être reconstitués sous forme d'une bouillie instantanée, il faut noter qu'il est possible d'obtenir par séchage sur rouleau des flocons de céréales présentant une très faible densité apparente qui confère une texture onctueuse au produit reconstitué et une très faible teneur en eau qui garantit une bonne conservabilité des flocons.

Le présent procédé permet de conserver l'essentiel de ces qualités au produit aggloméré final qui présente généralement une teneur en eau de 2,0-6,5% en poids. Au cas où ce dernier présente une teneur en eau de 4,0-6,5% en poids, il peut être avantageux de prévoir quand même un postséchage après l'agglomération. Cependant, on a constaté qu'il était possible, notamment en utilisant un sirop à très haute teneur en matière sèche, d'obtenir une teneur en eau de 2,0-4,0% en poids qui permet, le cas échéant, de supprimer l'étape du postséchage.

Dans cette forme d'exécution, le présent procédé permet de faire adhérer une poudre de lait écrémé dont les particules présentent généralement un diamètre moyen de l'ordre de 0,1-0,2 mm à des flocons de céréales présentant généralement une épaisseur de 0,5-1,0 mm et un diamètre moyen de 2-5 mm, de façon si régulière et homogène que les dimensions et la forme des flocons sont remarquablement préservées et que la densité apparente des flocons reste suffisamment faible pour que les qualités d'onctuosité du produit reconstitué soient préservées.

Le présent procédé autorise donc la pulvérisation du sirop sous forme de gouttelettes très fines. C'est ainsi que l'on peut pulvériser le sirop sous pression sous forme d'un brouillard. Pour ne pas risquer d'obstruer la ou les buses de pulvérisation ou de perdre une partie de l'effet agglomérant ou collant, il est préférable, le cas échéant, de pulvériser le sirop à une température supérieure à la température de cristallisation dudit sucre. Avec une solution de saccharose à 58-85% en poids de matière sèche p. ex., la température adéquate est d'au moins 70-120°C et la pression dans la buse de pulvérisation peut être de environ 12-25 bar p. ex. En utilisant une buse de pulvérisation où la dispersion d'un jet de solution est assurée par un jet concentrique d'air, on a constaté qu'il est avantageux d'utiliser une température d'air beaucoup plus élevée que celle de la solution, p. ex. 150-250°C et que l'on peut travailler à des pressions plus faibles.
Dans les cas où l'on désire un produit final contenant peu ou pas de sucre, on peut utiliser avantageusement un sirop d'amidon. De tels sirops peuvent être obtenus par hydrolyse de céréales p. ex.

Ces sirops posent des problèmes de collage et de viscosité à partir de teneurs en matière sèche beaucoup plus faibles. On peut utiliser avantageusement des sirops à 35-45 % en poids de matière sèche d'amidon hydrolysé présentant un DE (équivalent de dextrose) de 30-60 p. ex.

En outre, dans un mode d'exécution particulier du procédé selon l'invention, on chauffe ou refroidit le tourbillon. Par une telle opération, on peut exercer en particulier une influence sur certaines propriétés du produit final, notamment sur sa teneur en eau ou sur la nature éventuellement trop collante de sa surface. Un tel chauffage peut se réaliser par convection, rayonnement ou contact p. ex. De même, un tel refroidissement peut se réaliser par convection ou contact p. ex.

Enfin, en ce qui concerne le temps de séjour total des particules dans le tourbillon, il peut être avantageusement de quelques dizaines de secondes à quelques min, p. ex. de environ 1-3 min. Il est cependant important de noter que ce n'est pas ce temps de séjour des particules dans le tourbillon qui est déterminant pour le succès du présent procédé mais certainement le fait que l'enrobage des particules du produit principal avec les gouttelettes d'agent agglomérant et la mise en contact des particules du produit secondaire avec les particules du produit principal enrobé se font de manière spatialement distincte mais temporellement quasi simultanée.

L'appareil pour la mise en oeuvre en continu du présent procédé est donc remarquable en particulier par le fait qu'il comprend un dispositif de mise en rotation des particules de produit principal pour former ledit tourbillon dans la première partie du tambour incliné, ce tourbillon s'écoulant ensuite en quelque sorte vers l'extrémité inférieure du tambour grâce au mouvement général en spirale des particules dans le tourbillon. Ce dispositif de mise en rotation des particules consiste avantageusement en des éléments protubérants disposés contre la paroi du tambour dans sa première partie. Il est formé de préférence d'ailettes radiales fixées à la paroi du tambour.

L'appareil est ensuite remarquable par le fait qu'il contient au moins un dispositif de distribution de produit secondaire dans la moitié ascendante dans la seconde partie du tambour, ce dispositif étant donc localisé à l'intérieur de l'espace destiné à être occupé par le tourbillon. Ce dispositif présente avantageusement une configuration linéaire de manière à pouvoir assurer la distribution du produit particulaire le long d'une ligne parallèle à, voire confondue avec l'axe du tourbillon. Ce dispositif de distribution comprend de préférence un tube relié à une extrémité à un dispositif doseur, ouvert à l'autre extrémité, percé de trous sur le dessous et disposé parallèlement à l'axe du tambour.

Quant audit dispositif de pulvérisation de l'agent agglomérant, il peut aussi présenter avantageusement une configuration linéaire ou tout au moins assurer la pulvérisation de l'agent agglomérant sur une fraction de la longueur du tourbillon correspondant approximativement à la fraction de la longueur du tourbillon dans laquelle ledit produit particulaire secondaire est distribué. Ce dispositif de pulvérisation comprend de préférence plusieurs buses de pulvérisation sous pression disposées le long d'un axe parallèle à l'axe du tambour. Les dispositifs préférés de distribution du produit secondaire et de pulvérisation de l'agent agglomérant sont donc parallèles l'un à l'autre dans ladite deuxième partie du tambour. Compte tenu de l'ouverture du faisceau de gouttelettes projeté par chaque buse, le dispositif de pulvérisation est avantageusement placé à mi-hauteur dans le tambour.

Afin d'assurer des conditions de frottement constantes entre le tourbillon et la paroi du tambour, l'appareil peut comprendre en outre au moins un couteau racleur disposé contre la paroi du tambour parallèlement à son axe, dans ladite seconde partie, dans le haut de ladite moitié ascendante. Il est avantageusement placé de telle manière que les particules raclées retombent à côté du dispositif de pulvérisation, p. ex. de manière qu'elles retombent dans un espace laissé libre entre le dispositif de pulvérisation et la paroi du tambour.

Dans une forme d'exécution particulière du présent appareil, il est prévu qu'il comprenne en outre un dispositif de refroidissement ou chauffage du tourbillon dans une troisième partie du tambour. Ce dispositif peut être réalisé sous forme de bouches de distribution d'air chaud ou froid, ou sous forme d'éléments de chauffage ou refroidissement de la paroi du tambour p. ex. On peut également prévoir un dispositif de chauffage par rayonnement infrarouge ou microondes p. ex.

En outre, on peut avantageusement prévoir de munir chaque extrémité du tambour d'un diaphragme annulaire de retenue de diamètre extérieur égal et de diamètre intérieur inférieur à celui du tambour, et de disposer une plaque de retenue fixe contre l'extrémité inférieure du tambour, dans le prolongement de sa moitié ascendante. Le diaphragme de retenue placé à l'extrémité supérieure du tambour est destiné à éviter que des particules de produit principal ne ressortent du tambour au moment où elles sont entraînées par le dispositif de mise en rotation. Le diaphragme de retenue placé à l'extrémité inférieure du tambour est destiné à retenir les particules du produit aggloméré prêt à être évacué afin de faciliter l'ajustement du temps de séjour du produit dans le tambour. De même, la plaque de fermeture est destinée à exercer sur l'extrémité inférieure du tourbillon une légère pression qui contribue à assurer sa cohésion ou sa définition spatiale.

Enfin, le châssis support du tambour peut être avantageusement muni d'un dispositif permettant de régler l'inclinaison du tambour. En effet, pour un tambour de dimensions données, le temps de séjour du produit dans le tambour dépend directement de cette inclinaison. Si l'on désire modifier le débit de la ligne de fabrication, il est avantageux de pouvoir aussi adapter le temps de séjour du produit dans le tambour. Pour un tambour de 1 m de long et 0,7 m de diamètre et des débits de environ 400 -1200 kg de produit aggloméré par h, on peut utiliser p. ex. une inclinaison de 10-15°. Dans ces conditions et avec une vitesse de rotation du tambour de environ 16-22 tours/min adéquate pour former le tourbillon, le temps de séjour des particules de produit principal dans le tambour peut être d'environ 1-3 min et la charge instantanée du tambour, autrement dit le poids du tourbillon peut être d'environ 50 kg.

L'appareil pour la mise en oeuvre en continu du procédé selon la présente invention est décrit ci-après en référence au dessin dans lequel

- la figure 1 représente une vue schématique en élévation latérale d'une forme d'exécution de l'appareil et
- la figure 2 représente une vue schématique de face de l'appareil de la figure 1.

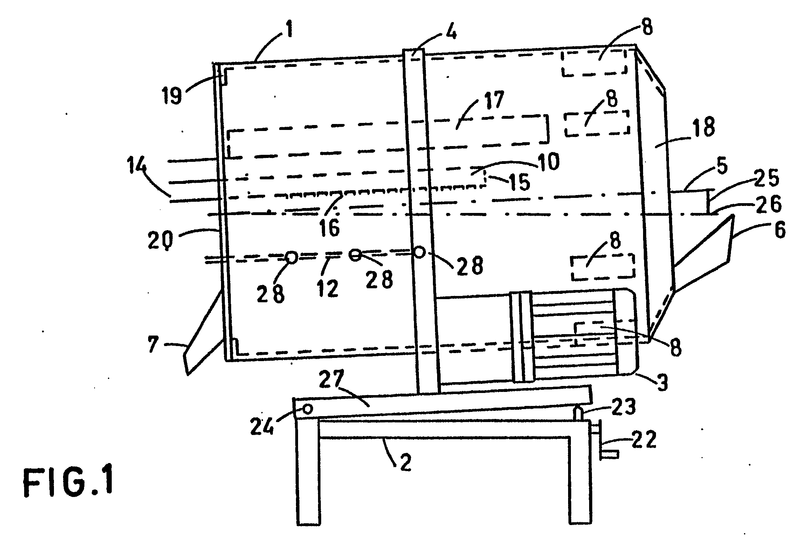

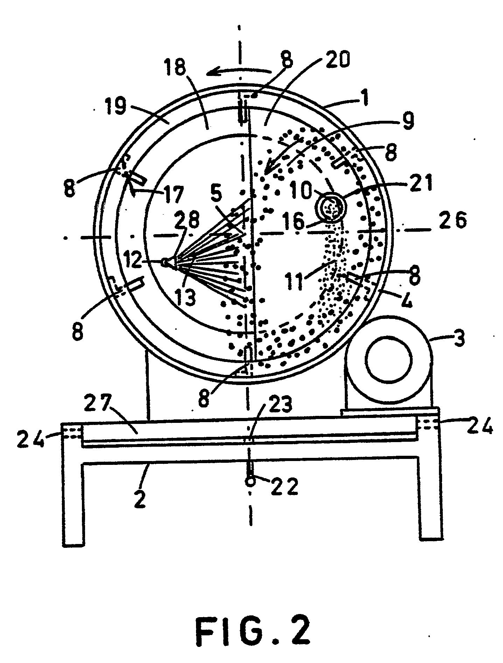

L'appareil représenté aux figures 1 et 2 comprend un tambour incliné 1, un châssis 2 support du tambour, des moyens d'entraînement 3, 4 pour faire tourner le tambour autour de son axe, un dispositif d'introduction 6 du produit principal à l'extrémité supérieure du tambour et un dispositif d'évacuation 7 du produit aggloméré à l'extrémité inférieure du tambour.

Les dispositifs d'introduction 6 et d'évacuation 7 sont des trémilles ou goulottes fixes non solidaires du tambour.

Les moyens d'entraînement consistent en un moteur 3 à vitesse de rotation variable transmettant le mouvement de rotation au tambour par friction sur un anneau d'entraînement 4 solidaire du tambour.

L'appareil comprend en outre un dispositif de mise en rotation 8 des particules 9 du produit principal autour d'un axe incliné dans la première partie du tambour s'étendant axialement à partir de son extrémité supérieure, un dispositif de distribution 10 de produit secondaire 11 dans la moitié ascendante de la seconde partie du tambour qui suit la première partie et s'étend axialement jusqu'à l'extrémité inférieure du tambour, et un dispositif de pulvérisation 12 de l'agent agglomérant 13 dans la moitié descendante de la seconde partie du tambour.

Le dispositif de mise en rotation 8 des particules 9 est formé d'ailettes radiales 8 fixées à la paroi du tambour.

Le dispositif de distribution 10 de produit secondaire 11 est fixe, non solidaire du tambour et il comprend un tube relié à une extrémité amont 14 à un dispositif doseur non représenté, ouvert à une extrémité aval 15, percé de trous 16 sur le dessous et disposé parallèlement à l'axe 5 du tambour. Le dispositif de distribution 10 est disposé à l'intérieur de l'espace destiné à être occupé par le tourbillon. Ce dernier est représenté en coupe sur la fig 2 et tourne autour d'un axe sensiblement parallèle à l'axe 5 du cylindre. Le dispositif de distribution 10 est donc destiné à distribuer les particules de produit secondaire 11 le long d'une ligne parallèle à et située un peu au-dessus de l'axe du tourbillon.

Le dispositif de pulvérisation 12 de l'agent agglomérant 13 est fixe, non solidaire du tambour et il comprend 3 buses 28 de pulvérisation sous pression disposées environ à mi-hauteur du tambour le long d'un axe parallèle à l'axe du tambour. Ce dispositif de pulvérisation 12 est disposé à l'extérieur de l'espace destiné à être occupé par le tourbillon et il est parallèle au dispositif de distribution 10 disposé lui à l'intérieur de l'espace destiné à être occupé par le tourbillon.

L'appareil représenté comporte également un couteau racleur 17 fixe, non solidaire du tambour, disposé contre la paroi du tambour parallèlement au dispositif de pulvérisation 12 mais au-dessus et à plus grande distance du plan vertical passant par l'axe 5 du cylindre, de manière que les particules raclées ne tombent pas sur le dispositif de pulvérisation.

L'appareil comprend en outre un diaphragme annulaire de retenue 18 à l'extrémité supérieure du tambour, un diaphragme annulaire de retenue 19 à l'extrémité inférieure du tambour et une plaque de fermeture 20 disposée contre l'extrémité inférieure du tambour. Les deux diaphragmes annulaires de retenue 18 et 19 sont solidaires de la paroi du tambour et définissent chacun une ouverture de diamètre inférieur au diamètre du tambour. La plaque de fermeture 20 est fixe, non solidaire du tambour, elle est percée d'une ouverture 21 traversée par le dispositif de distribution 10 et elle présente une forme de demi-cercle. Elle est disposée contre l'extrémité inférieure du tambour dans le prolongement de sa moitié ascendante, autrement dit dans le prolongement de l'espace destiné à être occupé par le tourbillon.

Enfin, le châssis 2 support du tambour est muni d'un dispositif 22, 23, 24 de réglage de l'inclinaison 25 du tambour par rapport au plan horizontal 26. Le dispositif de réglage de l'inclinaison comprend une manivelle 22 actionnant un levier 23 faisant pivoter une table 27 support du tambour autour d'un axe passant par des paliers 24 ménagés dans le châssis 2.

Le procédé selon la présente invention est illustré par les exemples ci-après dans lesquels les pourcentages et parties sont exprimés en poids.

Exemple 1

Pour préparer une bouillie déshydratée instantanée sous forme de flocons on prend comme produit principal des flocons de céréales préparés par séchage sur rouleau d'une bouillie de céréales. Ces flocons présentent une épaisseur de environ 0,6-0,7 mm, un diamètre moyen de environ 2-3 mm, une densité apparente de 90 g/l et une teneur en eau de 2,5 %. Leur composition est celle d'une farine de blé à laquelle on a ajouté 6,25 % de lait écrémé en poudre, sur matière sèche.

On prend comme produit secondaire du lait écrémé en poudre auquel on ajoute un prémélange de lait écrémé en poudre, de vitamines et de pyrophosphate de fer de manière que les concentrations respectives de ces deux additifs dans le produit final soient de 0,15 % et 0,036 % sur matière sèche. Ce lait écrémé en poudre présente une densité apparente de environ 600 g/l et une teneur en eau de 4 %. Il est composé de particules présentant un diamètre moyen de environ 0,1-0,2 mm.

On prépare comme agent agglomérant un sirop de saccharose à 70 % de matière sèche à 75°C.

On agglomère produit secondaire et produit primaire avec l'agent agglomérant, autrement dit on fait adhérer le lait écrémé en poudre sur les flocons de céréales avec le sirop de sucre chaud dans un appareil semblable à celui décrit ci-dessus en référence au dessin, dont le tambour présente une longueur de 1 m, un diamètre de 0,7 m et une inclinaison de 15°.

On introduit les flocons de céréales dans le tambour par son extrémité supérieure à raison de 850 kg/h. On fait tourner le tambour à 16-20 tours/min de manière à mettre en rotation les flocons de céréales autour d'un axe pratiquement parallèle à celui du tambour dans sa moitié ascendante. Une fois mises en rotation dans la première partie du tambour par les ailettes radiales qui garnissent sa paroi, les particules continuent leur mouvement de rotation tout en descendant lentement le long du tambour en un mouvement spiralé, l'ensemble des particules en mouvement constituant un tourbillon unitaire bien défini.

Par un dispositif de distribution formé d'un tube de 7 cm de diamètre percé sur le dessous sur une largeur de 2,5 cm et sur une longueur de 20 cm d'une multitude de trous de 4 mm de diamètre, disposé dans le tourbillon parallèlement à et un peu au-dessus de son axe, à 50 cm de l'extrémité inférieure du tambour, on distribue dans le tourbillon 252 kg/h de lait écrémé en poudre additionnés de 25 kg du prémélange de lait écrémé en poudre, de vitamines et de pyrophosphate de fer. Le lait en poudre ainsi distribué descend sous forme d'un rideau de poudre et se mélange immédiatement intimement au tourbillon.

Par un dispositif de pulvérisation formé de trois buses disposées le long d'un axe parallèle à l'axe du tambour, de 15 en 15 cm à partir de son extrémité inférieure, on pulvérise sur le côté descendant du tourbillon, à une distance de 20-30 cm du tourbillon, 171 kg/h du sirop de saccharose à 75°C. On réalise cette pulvérisation sous une pression de 15 bar avec l'appoint de 3 jets concentriques d'air à 150°C, ou sous une pression de 25 bar sans l'appoint de jets concentriques d'air, de manière que les trois faisceaux de gouttelettes microscopiques projetés contre le tourbillon forment un véritable brouillard qui enveloppe et enrobe immédiatement les particules du tourbillon. On évacue ou recueille à l'extrémité inférieure du tambour 1298 kg/h de produit aggloméré présentant une teneur en eau de 6,44 %, une densité apparente de 180 g/l et une granulométrie comparable à celle des flocons de céréales dudit produit principal.

On vérifie que ce procédé d'agglomération n'a occasionné aucune perte de lysine.

On vérifie également que l'index de mélange, défini comme le quotient de l'écart moyen sur la concentration moyenne d'un composant donné dans le produit final est de 3,7 % pour les protéines, 8 % pour le fer et 12,5 % pour la vitamine C. Ceci prouve que ce procédé d'agglomération garantit également une très bonne homogénéité du mélange, autrement dit une bonne homogénéité de la composition d'échantillons distincts du produit aggloméré.

On soumet ensuite le produit aggloméré à un postséchage de 3 min à 80°C au cours duquel sa teneur en eau est réduite à 2,5 % sans qu'aucune perte de lysine ne soit non plus occasionnée.

## Exemple 2

On procède de la manière décrite à l'exemple 1, à l'exception du fait que l'on travaille avec la moitié des quantités indiquées par h. Pour ce faire, on ajuste l'inclinaison du tambour à 10° au lieu de 15° par rapport au plan horizontal. On obtient un produit aggloméré comparable à celui de l'exemple 1.

## Exemple 3

On procède de la manière décrite à l'exemple 1, à l'exception du fait que l'on utilise comme agent agglomérant un sirop de saccharose à 75 % de matière sèche chauffé à 80°C. On obtient 1287 kg/h de produit aggloméré présentant une teneur en eau de 5,6 % et des qualités comparables à celles du produit aggloméré de l'exemple 1.

## Exemple 4

Pour préparer une bouillie déshydratée instantanée sous forme de flocons, on prend comme produit principal des flocons de céréales préparés par séchage sur rouleau d'une bouillie de céréales. Ces flocons présentent une épaisseur de 0,6-0,7 mm, un diamètre moyen de 2-3 mm, une densité apparente de 90 g/l et une teneur en eau de 2,5 %. Leur composition est la suivante, en % sur matière sèche:
farine de blé hydrolysée 31,4
farine de blé non hydrolysée 50,0
huile de beurre 3,0
huile végétale 8,9
lait écrémé 6,7

On prend comme produit secondaire du lait écrémé en poudre enrichi en fer et en vitamines présentant une densité apparente de environ 600 g/l et une teneur en eau de 4 %, et composé de particules présentant un diamètre moyen de environ 0,1-0,2 mm.

On prend comme agent agglomérant un sirop de saccharose à 75 % de matière sèche chauffé à 80°C.

Avec le même appareil et de la même manière qu'à l'exemple 1, on forme un tourbillon des flocons de céréales, on introduit dans le tourbillon 800 kg/h de ces flocons, on pulvérise sur le côté descendant du tourbillon 159 kg/h de ce sirop de saccharose à 80°C, on distribue dans le tourbillon 275 kg/h de lait écrémé en poudre et l'on recueille ou évacue du tourbillon 1244 kg/h de produit aggloméré.

Ce produit aggloméré présente une teneur en eau de 5,7 %, une densité apparente de 175 g/l et une granulométrie comparable à celle des flocons dudit produit principal. Il a la composition suivante, en % sur matière sèche:
farine de blé hydrolysée 21,0
farine de blé non hydrolysée 33,6
lait écrémé 27,2
saccharose 10,2
huile végétale 6,0
huile de beurre 2,0

On vérifie que le procédé d'agglomération n'a occasionné aucune perte de lysine par rapport à celle contenue dans lesdits produits principal et secondaire. On vérifie également que l'index de mélange est très bon, à savoir environ 3-4 % pour les protéines, environ 8 % pour le fer et environ 12 % pour la vitamine C.

On soumet ensuite le produit aggloméré à un postséchage de environ 3 min à 80°C au cours duquel sa teneur en eau est réduite à 2,5 % sans qu'aucune perte de lysine ne soit non plus occasionnée.

## Exemple 5

Pour préparer une bouillie déshydratée instantanée sous forme de flocons sans gluten ni saccharose, on prend comme produit principal des flocons de céréales préparés par séchage sur rouleau d'une bouillie de céréales. Ces flocons présentent une épaisseur de environ 0,6-0,7 mm, un diamètre moyen de environ 2-3 mm, une densité apparente de environ 90 g/l et une teneur en eau de 1,7%. Leur composition est la suivante, en % sur matière sèche:
farine de maïs hydrolisée 40
farine de maïs non hydrolisée 48
huile de beurre 3
huile végétale 9

On prend comme produit secondaire du lait écrémé en poudre enrichi en fer et en vitamines présentant une densité apparente de environ 600 g/l et une teneur en eau de 3,3%, et composé de particules présentant un diamètre moyen de environ 0,1-0,2 mm.

On prend comme agent agglomérant un sirop de farine de maïs hydrolysée à 41% de matière sèche présentant un DE de 55 et chauffé à 85°C.

Avec le même appareil de la même manière qu'à l'exemple 1, on forme un tourbillon des flocons de céréales, on introduit dans le tourbillon 800 kg/h de ces flocons, on pulvérise sur le côté descendant du tourbillon 83 kg/h de ce sirop de farine de maïs hydrolysée chauffé à 85°C, on distribue dans le tourbillon 359 kg/h de lait écrémé en poudre et l'on recueille ou évacue du tourbillon 1242 kg/h de produit aggloméré.

Ce produit aggloméré présente une teneur en eau de 5,9%, une densité apparente de environ 200 g/l et une granulométrie comparable à celle des flocons dudit produit principal. Ce produit sans gluten ni saccharose a la composition suivante, en % sur matière sèche:
farine de maïs hydrolysée 29,8
farine de maïs non hydrolysée 32,4
lait écrémé 29,8
huile végétale 6,1
huile de beurre 1,9

On soumet ensuite le produit aggloméré à un postséchage de quelques minutes à 80°C au cours duquel sa teneur en eau est réduite à 2,5%.

## Exemple 6

Pour préparer des céréales pour petit-déjeuner on prend comme produit principal des céréales expansées, en forme d'étoiles, d'anneaux ou d'amandes présentant des dimensions de l'ordre du cm et obtenus par cuisson extrusion d'une farine de céréales humidifiées additionnée de sucre, sel, malt et graisse. Ces céréales expansées ont subi un préséchage. Elles présentent une densité apparente de 110 g/l et une teneur en eau de 1%. Leur composition est la suivante, en % sur matière sèche:

farine de maïs 70
farine de blé 17
saccharose 7
chlorure de sodium 1
malt 3
graisse 2

On prend comme produit secondaire une poudre d'abricots vitaminée présentant une densité apparente de 737 g/l, une teneur en eau de pratiquement 0% et composée de particules dont le diamètre moyen est inférieur à 0,3 mm.

On prépare comme agent agglomérant un sirop de saccharose à 78% de matière sèche à 80°C.

On agglomère produit secondaire et produit primaire avec l'agent agglomérant, autrement dit on fait adhérer la poudre d'abricots à l'aide du sucre chaud sur les céréales expansées avec le même appareil et de la même manière qu'à l'exemple 1.

A cet effet, tout en ajustant l'inclinaison et la vitesse de rotation du tambour à des valeurs adéquates respectives de 10-15° et 16-22 tours/min, on forme un tourbillon des céréales expansées, on introduit dans le tourbillon 500 kg/h de ces céréales, on pulvérise sur le côté descendant du tourbillon 180 kg/h de ce sirop de saccharose, on distribue dans le tourbillon 20 kg/h de poudre d'abricots et l'on recueille ou évacue du tourbillon 700 kg/h de produit aggloméré présentant une densité apparente de 150 g/l et une teneur en eau de 5,6%.

Les céréales pour petit-déjeuner ainsi obtenues présentent toutes les qualités des céréales expansées de départ additionnées de tout l'arôme de la poudre d'abricots. On peut encore soumettre ces céréales à un postséchage de quelques minutes à 80°C pour réduire leur teneur en humidité à 2,5% sans diminuer leur arôme.

Exemple 7

Pour préparer des céréales pour petit-déjeuner, on prend comme produit principal des céréales expansées en forme de flocons de 1-2 cm de diamètre moyen et 1-2 mm d'épaisseur présentant la même composition que les céréales expansées de l'exemple 6, une densité apparente de 100 g/l et une teneur en eau de 8%.

On prend comme produit secondaire une poudre de cacao présentant une densité apparente de 440 g/l, une teneur en eau de 4,4 % et composée de particules dont le diamètre moyen est inférieur à 0,3 mm.

On prend comme agent agglomérant un sirop de saccharose à 70% de matière sèche et 70°C.

Avec le même appareil et de manière semblable à celle décrite à l'exemple 6, on fait adhérer 35 kg/h de cette poudre de cacao sur 700 kg/h de ces céréales expansées, avec 210 kg/h de ce sirop de saccharose. On obtient un produit aggloméré présentant une teneur en eau de 14%. Après un postséchage de plusieurs min à 80°C, on obtient des céréales pour petit-déjeuner présentant une teneur en eau de 2,5 % et une densité apparente de 150 g/l.

Ces céréales présentent un arôme et une couleur intenses de chocolat.

Exemple 8

Pour préparer des céréales pour petit-déjeuner, on prend comme produit principal des flocons de maïs présentant un diamètre moyen de 1-2 cm et obtenus par trempage, écrasement et séchage de grains de maïs. Ces flocons présentent une densité apparente de 100 g/l et une teneur en eau de 9%.

On prend comme produit secondaire du saccharose sous forme de sucre glace dont les particules présentent un diamètre moyen inférieur à 0,1 mm. Ce sucre glace présente une teneur en eau de 0% et une densité apparente de 675 g/l.

On prépare comme agent agglomérant un sirop de saccharose à 75% de matière sèche et 80°C.

Avec le même appareil et de manière semblable à celle décrite à l'exemple 6, on fait adhérer 25 kg/h de ce sucre glace sur 500 kg/h de ces flocons de maïs avec 200 kg/h de ce sirop de saccharose. On obtient 725 kg/h de produit aggloméré présentant une teneur en eau de 7%. Après un postséchage de quelques minutes à 80°C, on obtient des céréales pour petit déjeuner présentant une teneur en eau de 2,5% et une densité apparente de 140 g/l.

Ces flocons sucrés présentent une surface d'apparence neigeuse surprenante due à une cristallisation particulière du sucre appliqué avec si peu d'eau.

Exemple 9

Pour préparer des céréales pour petit-déjeuner, on prend des céréales expansées en forme de flocons de dimensions semblables à celles utilisées à l'exemple 7. Ces flocons présentent une densité apparente de 100 g/l et une teneur en eau réduite à 1% par un préséchage.

On prend comme produit secondaire des céréales expansées en forme d'aiguilles de environ 5 mm de long et 1-1,2 mm de large présentant également une teneur en eau de 1% mais une densité apparente de 150 g/l.

On prépare comme agent agglomérant un sirop de saccharose à 80% de matière sèche et 90°C.

Avec le même appareil et de manière semblable à celle décrite à l'exemple 6, on fait adhérer 50 kg/h de ces aiguilles de céréales sur 500 kg/h de ces flocons de maïs avec 175 kg/h de ce sirop de saccharose. On obtient 725 kg/h de produit aggloméré présentant une densité apparente de 150 g/l et une teneur en eau de 2,8%.

Ces céréales pour petit déjeuner présentent un aspect fibreux très naturel.

**Revendications**

1. Procédé d'agglomération d'au moins deux produits alimentaires particulaires, dans lequel on fait adhérer les particules d'au moins un produit secondaire sur les particules d'un produit principal à l'aide d'un agent agglomérant liquide, caractérisé par le

fait que l'on forme un tourbillon des particules dudit produit principal autour d'un axe horizontal ou incliné, on pulvérise ledit agent agglomérant de l'extérieur sur le tourbillon et l'on distribue les particules dudit produit secondaire de l'intérieur dans le tourbillon.

2. Procédé selon la revendication 1, caractérisé par le fait que l'on forme ledit tourbillon de particules dans un tambour rotatif, la rotation du tourbillon étant entretenue par la gravitation et le frottement contre la paroi du tambour.

3. Procédé selon la revendication 2, caractérisé par le fait que l'on pulvérise ledit agent agglomérant sur le côté descendant du tourbillon à partir d'un espace laissé libre entre le tourbillon et la paroi du tambour dans une moitié descendante du tambour.

4. Procédé selon la revendication 1, caractérisé par le fait que l'on forme ledit tourbillon de particules dans un tambour incliné, on introduit ledit produit particulaire principal en continu dans le tourbillon par l'extrémité supérieure du tambour et l'on évacue le produit aggloméré en continu du tourbillon par l'extrémité inférieure du tambour.

5. Procédé selon la revendication 1, caractérisé par le fait que les particules du produit principal sont des flocons de céréales obtenus par séchage sur rouleau d'une bouillie à base de céréales, le produit secondaire est un lait écrémé en poudre et l'agent agglomérant est un sirop de sucre et/ou d'amidon.

6. Procédé selon la revendication 1, caractérisé par le fait que les particules du produit principal sont des céréales expansées obtenues par cuisson-extrusion d'une farine de céréales humidfiée, le produit secondaire est une poudre de fruit, de cacao ou de sucre et l'agent agglomérant est un sirop de sucre et/ou d'amidon.

7. Procédé selon la revendication 1, caractérisé par le fait que l'on introduit par h dans le tourbillon 65-85 parties en poids de produit particulaire principal présentant une densité apparente de 90-200 g/l et une teneur en eau de 0,5-12% en poids, on pulvérise par h sur le tourbillon 15-30 parties en poids de sirop de sucre et/ou d'amidon présentant une teneur en eau de 15-60% en poids, on distribue par h dans le tourbillon 3-30 parties en poids de produit particulaire secondaire présentant une teneur en eau de 0-12% en poids, et l'on évacue par h du tourbillon 102-118 parties en poids de produit particulaire aggloméré présentant une densité apparente de 150-250 g/l et une teneur en eau de 2,0-15% en poids.

8. Procédé selon l'une des revendications 5-7, caractérisé par le fait que l'on pulvérise le sirop sous pression sous forme d'un brouillard à une température supérieure à la température de cristallisation dudit sucre.

9. Procédé selon la revendication 1, caractérisé par le fait que l'on chauffe ou refroidit le tourbillon.

10. Appareil pour la mise en oeuvre en continu du procédé selon la revendication 1, comprenant un tambour rotatif incliné, un châssis support du tambour, des moyens d'entraînement pour faire tourner le tambour autour de son axe, un dispositif d'introduction du produit principal à l'extrémité supérieure du tambour et un dispositif d'évacuation du produit aggloméré à l'extrémité inférieure du tambour, caractérisé par le fait qu'il comprend en outre un dispositif de mise en rotation des particules de produit principal autour d'un axe incliné dans une première partie du tambour, au moins un dispositif de distribution de produit secondaire dans une moitié ascendante dans une seconde partie du tambour, et un dispositif de pulvérisation de l'agent agglomérant dans ladite moitié descendante dans ladite seconde partie du tambour.

11. Appareil selon la revendication 10, caractérisé par le fait que ledit dispositif de mise en rotation des particules est formé d'ailettes radiales fixées à la paroi du tambour.

12. Appareil selon la revendication 10, caractérisé par le fait que ledit dispositif de distribution du produit secondaire comprend un tube relié à une extrémité à un dispositif doseur, ouvert à l'autre extrémité, percé de trous sur le dessous et disposé parallèlement à l'axe du tambour.

13. Appareil selon la revendication 10, caractérisé par le fait que ledit dispositif de pulvérisation de l'agent agglomérant comprend plusieurs buses de pulvérisation sous pression disposées le long d'un axe parallèle à l'axe du tambour.

14. Appareil selon la revendication 10, caractérisé par le fait qu'il comprend en outre au moins un couteau racleur disposé contre la paroi du tambour parallèlement à son axe, dans ladite seconde partie, dans le haut de ladite moitié ascendante.

15. Appareil selon la revendication 10, caractérisé par le fait qu'il comprend en outre un dispositif de refroidissement ou chauffage du tourbillon dans une troisième partie du tambour.

16. Appareil selon la revendication 10, caractérisé par le fait que chaque extrémité du tambour est munie d'un diaphragme annulaire de retenue de diamètre extérieur égal et de diamètre intérieur inférieur à celui du tambour, et qu'une plaque de fermeture fixe est disposée contre l'extrémité inférieure du tambour, dans le prolongement de sa moitié ascendante.

17. Appareil selon la revendication 10, caractérisé par le fait que ledit châssis est muni d'un dispositif de réglage de l'inclinaison du tambour.

## Claims

1. A process for the agglomeration of at least two particulate food products, in which the particles of at least one secondary product are made to adhere to the particles of a main product by means of a liquid agglomeration agent, wherein a vortex of the particles of said main product is formed about a horizontal or inclined axis, said agglomerating agent is sprayed onto the vortex from outside and the particles of said secondary product are distributed in the vortex from inside.

2. A process as claimed in Claim 1, wherein the said vortex of particles is formed in a rotary drum, the rotation of the vortex being maintained by gravitation and by friction against the wall of the drum.

3. A process as claimed in Claim 2, wherein said agglomerating agent is sprayed onto the descending side of the vortex from a space left free between the vortex and the wall of the drum in a descending half of the drum.

4. A process as claimed in Claim 1 wherein said vortex of particles is formed in an inclined drum, said particulate main product is continuously introduced into the vortex at the upper end of the drum and the agglomerated product is continuously removed from the vortex at the lower end of the drum.

5. A process as claimed in Claim 1, wherein the particles of said main product are cereal flakes obtained by roller drying of a paste based on cereals, the secondary product is a skimmed milk powder and the agglomerating agent is a syrup of sugar and/or starch.

6. A process as claimed in Claim 1, wherein the particles of the main product are expanded cereals obtained by extrusion cooking of a moistened cereal flour, the secondary product is a powder of fruit, cocoa or sugar and the agglomerating agent is a syrup of sugar and/or starch.

7. A process as claimed in Claim 1, wherein 65–85 parts by weight of particulate main product having a bulk density of 90–200 g/l and a water content of 0.5–12% by weight are introduced hourly into the vortex, 15–30 parts by weight of sugar syrup and/or starch syrup having a water content of 15–60% by weight are sprayed onto the vortex, 3–30 parts by weight of particulate secondary product having a water content of 0–12% by weight are distributed hourly in the vortex and 102–118 parts by weight of particulate agglomerated product having a bulk density of 150–250 g/l and a water content of 2.0–15% by weight are removed hourly from the vortex.

8. A process as claimed in any of Claims 5 to 7, wherein the syrup is sprayed under pressure in the form of a mist at a temperature above the crystallization temperature of said sugar.

9. A process as claimed in Claim 1, wherein the vortex is heated or cooled.

10. An apparatus for continuously carrying out the process claimed in Claim 1, comprising an inclined rotary drum, a frame supporting the drum, drive means for rotating the drum about its axis, means for introducing the main product at the upper end of the drum and means for removing the agglomerated product at the lower end of the drum, and further comprising means for rotating the particles of main product about an inclined axis in a first part of the drum, at least one means for distributing secondary product in an ascending half in a second part of the drum and means for spraying the agglomerating agent into said descending half in said second part of the drum.

11. An apparatus as claimed in Claim 10, wherein the means for rotating the particles consists of radial fins fixed to the wall of the drum.

12. An apparatus as claimed in Claim 10, wherein the means for distributing the secondary product comprises a tube which is connected at one end to a metering unit, is open at its other end, is drilled with holes underneath and arranged parallel to the axis of the drum.

13. An apparatus as claimed in Claim 10, wherein said means for spraying the agglomerating agent comprises several high-pressure spray nozzles arranged along an axis parallel to the axis of the drum.

14. An apparatus as claimed in Claim 10, further comprising at least one scraper blade disposed against the wall of the drum parallel to its axis in said second part at the top of said ascending half.

15. An apparatus as claimed in Claim 10, further comprising means for cooling or heating the vortex in a third part of the drum.

16. An apparatus as claimed in Claim 10, wherein each end of the drum is provided with an annular retaining diaphragm which is equal in its external diameter to the drum but smaller in its internal diameter and a fixed closure plate is disposed against the lower end of the drum in the extension of its ascending half.

17. An apparatus as claimed in Claim 10, wherein said frame is provided with a mechanism for adjusting the inclination of the drum.

## Patentansprüche

1. Verfahren zum Agglomerieren von wenigstens zwei teilchenförmigen Nahrungsmitteln, bei welchem man die Teilchen von wenigstens einem Nebenprodukt an den Teilchen eines Hauptproduktes mit Hilfe eines flüssigen Agglomerierungsmittels zum Anhaften bringt, dadurch gekennzeichnet, daß man rund um eine horizontale oder geneigte Achse herum einen Wirbel der Teilchen des genannten Hauptproduktes ausbildet, daß man das genannte Agglomerierungsmittel von außen auf den Wirbel aufsprüht und daß man die Teilchen des genannten Nebenproduktes von innen im Wirbel verteilt.

2. Verfahren nach Anspruch 1, dadurch gekennzeichnet, daß man den Wirbel aus Teilchen in einer Drehtrommel ausbildet, wobei die Drehung des Wirbels durch die Schwerkraft und die Reibung gegen die Wand der Trommel aufrechterhalten wird.

3. Verfahren nach Anspruch 2, dadurch gekennzeichnet, daß man das Agglomerierungsmittel auf die abwärts gerichtete Seite des Wirbels aufsprüht, und zwar ausgehend von einem zwischen dem Wirbel und der Trommelwand in einer abwärts gerichteten Hälfte der Trommel freigelassenen Raum aus.

4. Verfahren nach Anspruch 1, dadurch gekennzeichnet, daß man den Wirbel aus Teilchen in einer geneigten Trommel ausbildet, daß man das teilchenförmige Hauptprodukt kontinuierlich in den Wirbel durch das obere Ende der Trommel einführt und daß man das agglomerierte Produkt kontinuierlich aus dem Wirbel über das untere Ende der Trommel abzieht.

5. Verfahren nach Anspruch 1, dadurch gekennzeichnet, daß die Teilchen des Hauptproduktes Getreideflocken sind, welche durch Walzentrocknung einer Brühe auf Getreidebasis erhalten worden sind, daß das Nebenprodukt ein Magermilchpulver ist und daß das Agglomerierungsmittel ein Zuckerund/oder Stärkesirup ist.

6. Verfahren nach Anspruch 1, dadurch gekennzeichnet, daß die Teilchen des Hauptproduktes expandierte Getreide sind, welche durch Koch-Extrusion eines angefeuchteten Getreidemehls erhalten worden sind, daß das Nebenprodukt ein Fruchtpulver, Kakao oder Zucker ist und daß das Agglomerierungsmittel ein Zucker- und/oder Stärkesirup ist.

7. Verfahren nach Anspruch 1, dadurch gekennzeichnet, daß man in das Wirbel je Stunde 65 bis 85 Gew.-Teile des teilchenförmigen Hauptproduktes einführt, welches ein Schüttvolumen von 90 bis 200 g/l und einen Wassergehalt von 0,5 bis 12 Gew.-% aufweist, daß man je h auf den Wirbel 15 bis 30 Gew.-Teile Zucker- und/oder Stärkesirup aufsprüht, welcher einen Wassergehalt von 15 bis 60 Gew.-% aufweist, daß man je h in dem Wirbel 3 bis 30 Gew.-Teile des teilchenförmigen Nebenproduktes verteilt, welches einen Wassergehalt von 0 bis 12 Gew.-% aufweist und daß man je h aus dem Wirbel 102 bis 118 Gew.-Teile an teilchenförmigem, agglomeriertem Produkt abzieht, welches ein Schüttvolumen von 150 bis 250 g/l und einen Wassergehalt von 2,0 bis 15 Gew.-% aufweist.

8. Verfahren nach einem der Ansprüche 5 bis 7, dadurch gekennzeichnet, daß man den Sirup unter Druck in der Form eines Nebels und bei einer Temperatur aufsprüht, welche höher als die Kristallisationstemperatur des betreffenden Zuckers ist.

9. Verfahren nach Anspruch 1, dadurch gekennzeichnet, daß man den Wirbel erwärmt oder abkühlt.

10. Vorrichtung für die kontinuierliche Durchführung des Verfahrens nach Anspruch 1, welche eine geneigte Drehtrommel, ein Trägergestell für die Trommel, Antriebsmittel, um die Trommel in Drehung um ihre Achse zu versetzen, eine Einrichtung zum Einführen des Hauptproduktes am oberen Ende der Trommel und eine Einrichtung zum Entleeren des agglomerierten Produktes am unteren Ende der Trommel umfaßt, dadurch gekennzeichnet, daß sie außerdem eine Einrichtung, welche dazu dient, die Teilchen des Hauptproduktes in einem ersten Teil der Trommel um eine geneigte Achse in Drehung zu versetzen, wenigstens eine Einrichtung zum Verteilen des Nebenproduktes in einer aufwärts gerichteten Hälfte in einem zweiten Teil der Trommel, und eine Einrichtung zum Versprühen des Agglomerierungsmittels in der abwärts gerichteten Hälfte in dem zweiten Teil der Trommel umfaßt.

11. Vorrichtung nach Anspruch 10, dadurch gekennzeichnet, daß die Einrichtung, welche dazu dient, die Teilchen in Drehung zu versetzen, aus an der Trommelwand befestigten, radialen Schaufeln besteht.

12. Vorrichtung nach Anspruch 10, dadurch gekennzeichnet, daß die Einrichtung zum Verteilen des Nebenproduktes ein Rohr umfaßt, welches mit einem Ende mit einer Dosiervorrichtung verbunden ist und welches an seinem anderen Ende offen ist, welches an seiner Unterseite von Löchern durchbohrt ist und welches parallel zu der Trommelachse angeordnet ist.

13. Vorrichtung nach Anspruch 10, dadurch gekennzeichnet, daß die Einrichtung zum Versprühen des Agglomerierungsmittels mehrere Düsen für ein Versprühen unter Druck umfaßt, welche Düsen längs einer zu der Trommelachse parallelen Achse angeordnet sind.

14. Vorrichtung nach Anspruch 10, dadurch gekennzeichnet, daß sie außerdem wenigstens ein Abstreifmesser umfaßt, welches gegen die Trommelwand und parallel zu der Achse der Trommel, und zwar in dem zweiten Teil, nämlich im oberen Teil der abwärts gerichteten Hälfte, angeordnet ist.

15. Vorrichtung nach Anspruch 10, dadurch gekennzeichnet, daß sie außerdem eine Einrichtung zum Abkühlen oder Erwärmen des Wirbels in einem dritten Teil der Trommel umfaßt.

16. Vorrichtung nach Anspruch 10, dadurch gekennzeichnet, daß jedes Ende der Trommel mit einer ringförmigen Rückhalteblende ausgestattet ist, deren Außendurchmesser gleich jenem der Trommel ist und deren Innendurchmesser kleiner als jener der Trommel ist und daß eine feststehende Verschlußplatte gegen das untere Ende der Trommel, und zwar in der Verlängerung der aufwärts gerichteten Hälfte, angeordnet ist.

17. Vorrichtung nach Anspruch 10, dadurch gekennzeichnet, daß das Gestell mit einer Einrichtung zur Regelung der Neigung der Trommel ausgestattet ist.

FIG.1

FIG.2